# FASCICULE DE BREVET EUROPEEN

(11) **EP 3 990 792 B1**
(45) Date de publication et mention de la délivrance du brevet: **24.05.2023**
(21) Numéro de dépôt: 20733645.4
(22) Date de dépôt: 23.06.2020
(51) Int. Cl.: F16C 25/02, F16C 25/08, F16C 35/077, F16C 1/04

(54) **MACHINE ELECTRIQUE TOURNANTE MUNIE D'UN ORGANE DE PRECONTRAINTE DE ROULEMENT**
ELEKTRISCHE DREHMASCHINE MIT EINEM WÄLZLAGERVORSPANNELEMENT
ROTATING ELECTRICAL MACHINE EQUIPPED WITH A ROLLING BEARING PRETENSIONING MEMBER

(30) Priorité: 25.06.2019 FR 1906880
(43) Date de publication de la demande: 04.05.2022
(73) Titulaire: VALEO EQUIPEMENTS ELECTRIQUES MOTEUR, 94046 Créteil Cedex (FR)
(72) Inventeur: RIVALS, Alexis, 94046 CRETEIL CEDEX (FR); LABROSSE, Jean-Claude, 94046 CRETEIL CEDEX (FR)
(74) Mandataire: Valeo Powertrain Systems
(86) Numéro de dépôt international: PCT/EP2020/067561
(87) Numéro de publication internationale: WO 2020/260320

(56) Documents cités:
- WO-A1-2004/107533
- FR-A1- 2 460 414
- JP-A- S59 110 921
- JP-A- 2008 271 747
- US-A1- 2014 270 615

## Description

La présente invention porte sur une machine électrique tournante munie d'un organe de précontrainte de roulement. L'invention trouve une application particulièrement avantageuse, mais non exclusive, avec les machines électriques tournantes équipant les véhicules automobiles.

De façon connue en soi, une machine électrique tournante comporte un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le rotor comporte un corps formé par un empilage de feuilles de tôles maintenues sous forme de paquet au moyen d'un système de fixation adapté, tel que des rivets. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir un bobinage. Le bobinage est obtenu par exemple à partir d'un fil continu recouvert d'émail ou d'épingles soudées entre elles. Le bobinage pourra comporter des enroulements polyphasés connectés en étoile ou en triangle dont les sorties sont reliées à un module électronique de commande comportant un onduleur de puissance pouvant également fonctionner en mode redresseur.

Le stator est monté dans un carter comportant des paliers configurés pour porter à rotation l'arbre par l'intermédiaire de roulements. Afin d'optimiser sa durée de vie, un roulement de la machine électrique tournante assurant le guidage en rotation de l'arbre doit fonctionner sous une contrainte mécanique axiale et/ou radiale. Pour les machines électriques constituant des alternateurs, la contrainte mécanique est appliquée par le système de transmission de mouvement à courroie interposé entre la poulie de la façade accessoires du moteur thermique et une poulie montée sur l'arbre de la machine électrique.

Toutefois, pour certaines architectures de traction comprenant une machine électrique en prise avec un engrenage, notamment un engrenage d'une boîte de vitesses, il a été observé de nombreuses situations de vie dans lesquelles aucun couple n'est appliqué à la machine électrique tournante de sorte que le roulement n'est pas sous contrainte mécanique.

La demanderesse a donc disposé un organe de précontrainte à l'intérieur d'un logement de roulement. Toutefois, cela a posé des problèmes de montage dans la mesure où il était nécessaire de déplacer l'ensemble des parties actives (rotor et stator) par rapport au palier pour faire coopérer l'arbre et un roulement correspondant d'un palier.

La présente invention vise à remédier efficacement à cet inconvénient en proposant un ensemble pour machine électrique tournante comportant :
- un palier comportant un logement pour un roulement,
- un organe de précontrainte du roulement destiné à être disposé axialement entre le fond du logement et le roulement, et
- un organe de maintien du roulement destiné à être disposé radialement entre le roulement et une paroi latérale du logement, l'organe de maintien du roulement étant agencé pour permettre de maintenir axialement l'organe de précontrainte dans le logement du palier avant que le roulement soit inséré dans le logement, pendant une phase d'assemblage de la machine électrique tournante, l'organe de maintien étant agencé de façon à ne pas être en contact avec l'organe de précontrainte lorsque le roulement est inséré dans le logement du palier.

Un ensemble pour une machine électrique tournante selon le préambule de la revendication 1 est connu par le document WO 2004/107533 A1.

L'invention permet ainsi de faciliter le montage de la machine électrique en autorisant à manipuler l'ensemble formé par "le palier, l'organe de maintien du roulement, et l'organe de précontrainte" sans risque de chute de l'organe de précontrainte lors de la manipulation et cela tout en maintenant immobiles l'arbre avec son roulement et les parties actives (stator et rotor) lors de la mise en place des paliers de la machine électrique tournante.

Selon une réalisation, le roulement comportant une bague intérieure, une bague extérieure, et un joint disposé entre la bague intérieure et la bague extérieure, l'organe de précontrainte est configuré pour appliquer un effort axial sur la bague extérieure du roulement sans venir en contact avec le joint. Cela permet de prolonger la durée de vie du roulement.

Selon une réalisation, l'organe de précontrainte est une rondelle ondulée ou une rondelle conique.

Selon une réalisation, l'organe de maintien est réalisé dans un matériau présentant une capacité de dilatation thermique supérieure à celle du roulement, pour compenser des jeux entre le roulement et le palier susceptibles d'apparaître lors d'une dilatation du palier à haute température. Selon une réalisation, l'organe de maintien est réalisé dans un matériau plastique.

Selon une réalisation, l'organe de maintien présente un corps de forme annulaire muni d'un moyen de maintien axial pour maintenir axialement ledit organe de maintien par rapport au logement.

Selon une réalisation, l'organe de maintien est constitué par une bague de tolérance.

Selon une réalisation, l'organe de maintien est circonscrit entièrement à l'intérieur du logement sans dépasser axialement ni radialement du côté d'un fond dudit logement.

L'invention porte également sur une machine électrique tournante comportant un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
- La figure 1 est une vue en coupe longitudinale d'une machine électrique tournante selon la présente invention ;
- La figure 2 est une vue en coupe détaillée du logement du roulement dans lequel sont disposés un organe de maintien du roulement et un organe de précontrainte selon la présente invention ;
- La figure 3 est une vue en perspective d'un organe de maintien du roulement destiné à être intégré dans la machine électrique tournante selon l'invention ;
- La figure 4 est une vue en perspective d'un organe de précontrainte du roulement destiné à être intégré dans la machine électrique tournante selon l'invention ;
- La figure 5 est une vue en perspective de l'organe de maintien du roulement et de l'organe de précontrainte destinés à être intégrés dans la machine électrique tournante selon l'invention.

Les éléments identiques, similaires, ou analogues conservent la même référence d'une figure à l'autre.

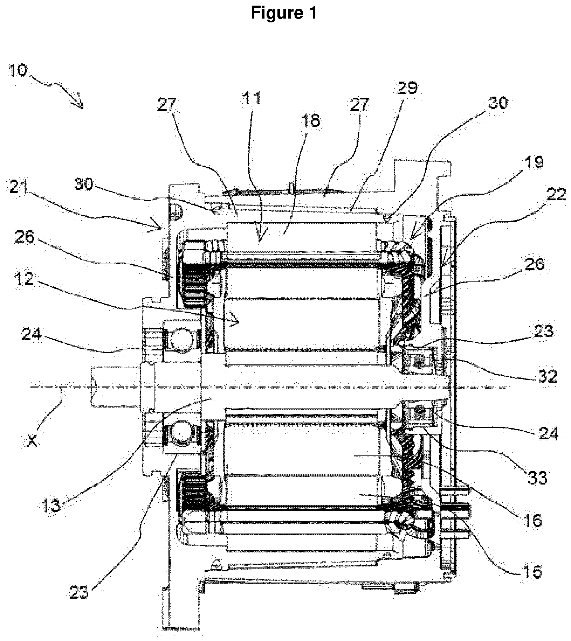

La figure 1 montre une machine électrique tournante 10 comportant un stator 11 polyphasé entourant un rotor 12 monté sur un arbre 13 d'axe X correspondant à l'axe de la machine électrique 10. Le stator 11 entoure le rotor 12 avec présence d'un entrefer entre la périphérie interne du stator 11 et la périphérie externe du rotor 12.

Le rotor 12 comporte, de façon connue en soi, un corps 15 sous la forme d'un paquet de tôles. Des aimants permanents 16 sont implantés dans des cavités du corps 15. Les aimants permanents 16 pourront être en terres rares ou en ferrite selon les applications et la puissance recherchée de la machine électrique 10.

Par ailleurs, le stator 11 comporte un corps 18 ainsi qu'un bobinage 19. Le corps 18 comporte une pluralité d'encoches ouvertes axialement et radialement pour le montage du bobinage statorique 19. En l'occurrence, le bobinage 19 est formé par des épingles soudées entre elles. En variante, le bobinage pourra être formé à partir d'un fil continu recouvert d'émail ou de bobines enroulées autour des dents du corps 18. Le bobinage 19 pourra comporter des enroulements polyphasés connectés en étoile ou en triangle dont les sorties sont reliées à un module électronique de commande comportant un onduleur de puissance pouvant également fonctionner en mode redresseur.

La machine électrique 10 comporte également un palier avant 21 et un palier arrière 22 réalisés par exemple dans un matériau à base d'aluminium. Le palier avant 21 et le palier arrière 22 sont munis chacun d'un logement 23 destiné à recevoir un roulement 24, notamment un roulement à billes, assurant un guidage en rotation de l'arbre 13.

Un roulement 24 comporte une bague intérieure 24.1, une bague extérieure 24.2, des billes 24.3 permettant le mouvement de rotation relatif entre les deux bagues 24.1, 24.2, et un joint 24.4 disposé entre la bague intérieure 24.1 et la bague extérieure 24.2.

Le palier avant 21 est situé du côté de la sortie de l'arbre 13 destinée à coopérer avec un élément externe de la machine électrique 10, tel qu'un engrenage d'une boîte de vitesses, tandis que le palier arrière 22 est situé du côté opposé par rapport à la sortie de l'arbre 13.

En l'occurrence, un palier 21, 22 comporte une paroi 26 d'orientation transversale par rapport à l'axe X comprenant centralement le logement 23 d'un roulement 24 et de laquelle est issue une paroi latérale 27 annulaire d'orientation axiale par rapport à l'axe X.

Une chambre de refroidissement 29 est délimitée par la périphérie externe de la paroi latérale 27 du palier avant 21 et la périphérie interne de la paroi latérale 27 du palier arrière 22. Cette chambre de refroidissement 29 est fermée hermétiquement à ses extrémités axiales par deux joints 30. Le stator 11 est monté de préférence fretté à l'intérieur du palier avant 21 de manière à établir un contact intime entre la périphérie externe du corps de stator 11 et la périphérie interne de la paroi latérale 27 du palier avant 21.

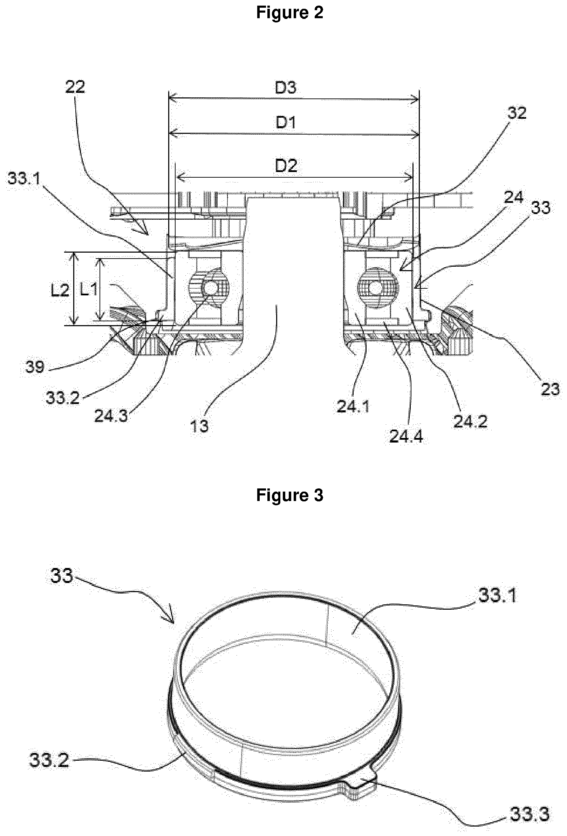

Comme on peut le voir sur la figure 2, afin de garantir un fonctionnement du roulement 24 sous une contrainte mécanique, un organe de précontrainte 32 est disposé axialement entre le fond du logement 23 du palier arrière 22 et le roulement 24 correspondant de façon à appliquer un effort axial sur le roulement 24. En outre, un organe de maintien 33 du roulement 24 est disposé radialement entre le roulement 24 et une paroi latérale du logement 23. L'organe de maintien 33 est agencé pour permettre de maintenir axialement l'organe de précontrainte 32 dans le logement 23 du palier arrière 22 avant que le roulement 24 soit inséré dans le logement 23 pendant une phase d'assemblage de la machine électrique tournante 10. A cette fin, un diamètre externe D1 de l'organe de précontrainte 32 est supérieur à un diamètre interne D2 de l'organe de maintien 33 et inférieur ou égal à un diamètre externe D3 de l'organe de maintien 33. Le diamètre externe D3 de l'organe de maintien 33 est sensiblement égal au diamètre interne du logement 23.

L'organe de précontrainte 32 pourra ainsi reposer sur une extrémité axiale de l'organe de maintien 33 lorsque l'ensemble "palier 22, organe de précontrainte 32, et organe de maintien 33" est placé à la verticale de façon à coopérer avec un roulement 24 de l'arbre 13 sur lequel est monté le rotor 12.

L'organe de précontrainte 32 est configuré pour appliquer un effort axial sur la bague extérieure 24.2 du roulement 24 sans venir en contact avec le joint 24.4. Cela permet de prolonger la durée de vie du roulement 24. L'organe de précontrainte 32 est de préférence une rondelle ondulée, tel que cela est montré sur les figures 2, 4, et 5. La rondelle 32 présente ainsi une pluralité d'ondulations 35 formées par une succession de pics 36 et de creux 37. Le nombre d'ondulations 35 de la rondelle 32, par exemple compris entre 3 et 8, dépend de l'application et en particulier de l'effort à appliquer sur le roulement 24. Alternativement, la rondelle 32 pourra être une rondelle conique.

Selon l'invention, l'organe de maintien 33 est agencé de façon à ne pas être en contact avec l'organe de précontrainte 32 lorsque le roulement 24 est inséré dans le logement 23 du palier. A cet effet, l'organe de maintien 33 présente une longueur axiale L1 inférieure à la longueur axiale L2 de la bague extérieure 24.2 du roulement 24, tel que montré sur la figure 2.

L'organe de maintien 33 est réalisé dans un matériau, notamment un matériau plastique, dont la dilatation thermique est supérieure à celle du roulement 24, pour compenser des jeux entre le roulement 24 et le palier 22 susceptibles d'apparaître lors d'une dilatation du palier 22 à haute température.

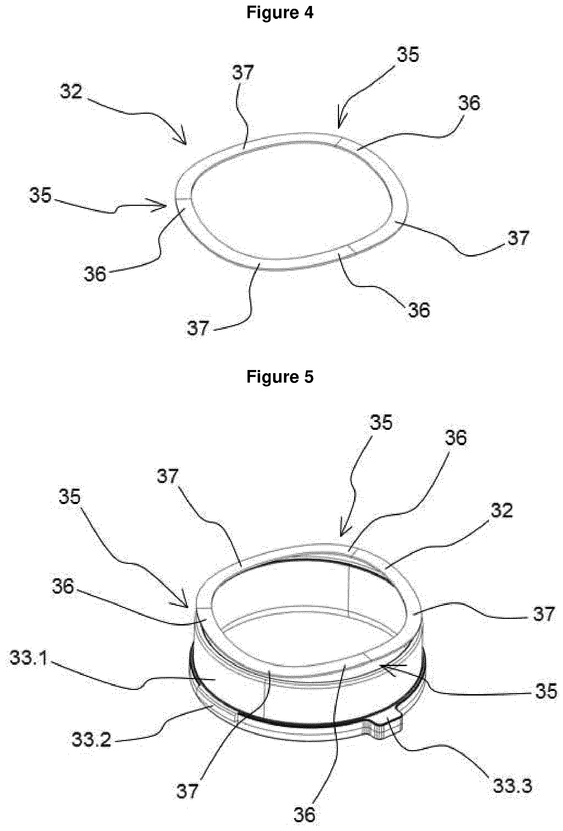

En l'occurrence, comme on peut le voir sur les figures 3 et 5, l'organe de maintien 33 présente un corps 33.1 de forme annulaire muni d'un moyen de maintien axial 33.2 pour maintenir axialement ledit organe de maintien 33 par rapport au logement 23. Le moyen de maintien axial 33.2 pourra par exemple être constitué par un rebord destiné à s'insérer dans une gorge 39 de forme correspondante ménagée dans le logement 23 (cf. figure 2).

L'organe de maintien 33 pourra également comporter un moyen d'anti-rotation 33.3 consistant en un ergot inséré dans une creusure de forme correspondante ménagée dans le logement 23. La présence du moyen d'anti-rotation 33.3 n'est toutefois pas indispensable.

L'organe de maintien 33 est circonscrit entièrement à l'intérieur du logement 23 sans dépasser axialement ni radialement du côté d'un fond dudit logement 23.

En variante, l'organe de maintien 33 est constitué par une bague de tolérance. Cette bague de tolérance comporte une portion annulaire élastiquement déformable pour s'adapter aux variations de dimensions du logement 23 lors de sa dilatation ainsi qu'une pluralité d'éléments implantés en périphérie interne de la portion annulaire. Ces éléments internes sont également élastiquement déformables afin de garantir le contact avec le roulement 24. Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans le cadre de l'invention telle que définies par les revendications ci-jointes.

## Revendications

1. Ensemble pour machine électrique tournante (10) comportant
- un palier (22) comportant un logement (23) pour un roulement (24),
- un organe de précontrainte (32) du roulement (24) destiné à être disposé axialement entre le fond du logement (23) et le roulement (24), et
- un organe de maintien (33) du roulement (24) destiné à être disposé radialement entre le roulement (24) et une paroi latérale du logement (23),
l'organe de maintien (33) du roulement (24) étant agencé pour permettre de maintenir axialement l'organe de précontrainte (32) dans le logement (23) du palier (22) avant que le roulement (24) soit inséré dans le logement (23), pendant une phase d'assemblage de la machine électrique tournante (10), **caractérisé en ce que** l'organe de maintien (33) est agencé de façon à ne pas être en contact avec l'organe de précontrainte (32) lorsque le roulement (24) est inséré dans le logement (23) du palier (22).

2. Ensemble selon la revendication 1, **caractérisé en ce que** le roulement (24) comportant une bague intérieure (24.1), une bague extérieure (24.2), et un joint (24.4) disposé entre la bague intérieure (24.1) et la bague extérieure (24.2), l'organe de précontrainte (32) est configuré pour appliquer un effort axial sur la bague extérieure (24.2) du roulement (24) sans venir en contact avec le joint (24.4).

3. Ensemble selon l'une quelconque des revendications 1 à 2, **caractérisé en ce que** l'organe de précontrainte (32) est une rondelle ondulée ou une rondelle conique.

4. Ensemble selon l'une quelconque des revendications 1 à 3, **caractérisé en ce que** l'organe de maintien (33) est réalisé dans un matériau présentant une capacité de dilatation thermique supérieure à celle du roulement (24), pour compenser des jeux entre le roulement (24) et le palier (22) susceptibles d'apparaître lors d'une dilatation du palier (22) à haute température.

5. Ensemble selon la revendication 4, **caractérisé en ce que** l'organe de maintien (33) est réalisé dans un matériau plastique.

6. Ensemble selon l'une quelconque des revendications 1 à 5, **caractérisé en ce que** l'organe de maintien (33) présente un corps (33.1) de forme annulaire muni d'un moyen de maintien axial (33.2) pour maintenir axialement ledit organe de maintien (33) par rapport au logement (23).

7. Ensemble selon l'une quelconque des revendications 1 à 5, **caractérisé en ce que** l'organe de maintien (33) est constitué par une bague de tolérance.

8. Ensemble selon l'une quelconque des revendications 1 à 7, **caractérisé en ce que** l'organe de maintien (33) est circonscrit entièrement à l'intérieur du logement (23) sans dépasser axialement ni radialement du côté d'un fond dudit logement (23).

9. Machine électrique tournante (10) comportant un ensemble tel que défini selon l'une quelconque des revendications précédentes.

## Patentansprüche

1. Baugruppe für eine rotierende elektrische Maschine (10), umfassend:
- ein Lager (22) mit einem Gehäuse (23) für einen Lagerring (24),
- ein Vorspannorgan (32) des Lagerrings (24), das dazu bestimmt ist, axial zwischen dem Boden des Gehäuses (23) und dem Lagerring (24) angeordnet zu sein, und
- ein Halteorgan (33) des Lagerrings (24), das dazu bestimmt ist, radial zwischen dem Lagerring (24) und einer Seitenwand des Gehäuses (23) angeordnet zu sein, wobei das Halteorgan (33) des Lagerrings (24) dazu angeordnet ist, zu ermöglichen, dass das Vorspannorgan (32) während einer Montagephase der rotierenden elektrischen Maschine (10) axial im Gehäuse (23) des Lagers (22) gehalten wird, bevor der Lagerring (24) in das Gehäuse (23) eingesetzt wird,
**dadurch gekennzeichnet, dass**
das Halteorgan (33) so angeordnet ist, dass es nicht mit dem Vorspannorgan (32) in Kontakt steht, wenn der Lagerring (24) in das Gehäuse (23) des Lagers (22) eingesetzt ist.

2. Baugruppe nach Anspruch 1, **dadurch gekennzeichnet, dass** der Lagerring (24) einen Innenring (24.1), einen Außenring (24.2) und eine zwischen dem Innenring (24.1) und dem Außenring (24.2) angeordnete Dichtung (24.4) aufweist, wobei das Vorspannorgan (32) dazu ausgelegt ist, eine axiale Kraft auf den Außenring (24.2) des Lagerrings (24) auszuüben, ohne mit der Dichtung (24.4) in Kontakt zu kommen.

3. Baugruppe nach einem der Ansprüche 1 bis 2, **dadurch gekennzeichnet, dass** das Vorspannorgan (32) eine Wellenscheibe oder eine konische Scheibe ist.

4. Baugruppe nach einem der Ansprüche 1 bis 3, **dadurch gekennzeichnet, dass** das Halteorgan (33) aus einem Material gefertigt ist, das eine Wärmeausdehnungskapazität aufweist, die höher als die des Lagerrings (24) ist, um Spiele zwischen dem Lagerring (24) und dem Lager (22), die bei einer Ausdehnung des Lagers (22) bei hohen Temperaturen auftreten können, auszugleichen.

5. Baugruppe nach Anspruch 4, **dadurch gekennzeichnet, dass** das Halteorgan (33) aus einem Kunststoffmaterial gefertigt ist.

6. Baugruppe nach einem der Ansprüche 1 bis 5, **dadurch gekennzeichnet, dass** das Halteorgan (33) einen ringförmigen Körper (33.1) aufweist, der mit einem axialen Haltemittel (33.2) versehen ist, um das Halteorgan (33) relativ zum Gehäuse (23) axial zu halten.

7. Baugruppe nach einem der Ansprüche 1 bis 5, **dadurch gekennzeichnet, dass** das Halteorgan (33) aus einem Toleranzring gebildet ist.

8. Baugruppe nach einem der Ansprüche 1 bis 7, **dadurch gekennzeichnet, dass** das Halteorgan (33) im Inneren des Gehäuses (23) vollständig begrenzt ist, ohne auf einer Seite eines Bodens des Gehäuses (23) axial oder radial vorzustehen.

9. Rotierende elektrische Maschine (10) mit einer Baugruppe, wie sie nach einem der vorangehenden Ansprüche definiert ist.

## Claims

1. Assembly for a rotary electric machine (10), having:
- a bearing (22) having a recess (23) for a rolling bearing (24),
- a member (32) for preloading the rolling bearing (24), intended to be disposed axially between the end wall of the recess (23) and the rolling bearing (24), and
- a member (33) for holding the rolling bearing (24), intended to be disposed radially between the rolling bearing (24) and a lateral wall of the recess (23),
the member (33) for holding the rolling bearing (24) being arranged so as to make it possible to axially hold the preloading member (32) in the recess (23) of the bearing (22) before the rolling bearing (24) is inserted into the recess (23), during a phase of assembly of the rotary electric machine (10), **characterized in that**
the holding member (33) is arranged so as not to be in contact with the preloading member (32) when the rolling bearing (24) is inserted into the recess (23) of the bearing (22).

2. Assembly according to Claim 1, **characterized in that**, the rolling bearing (24) having an inner ring (24.1), an outer ring (24.2), and a seal (24.4) disposed between the inner ring (24.1) and the outer ring (24.2), the preloading member (32) is configured to apply an axial force to the outer ring (24.2) of the rolling bearing (24) without coming into contact with the seal (24.4).

3. Assembly according to either one of Claims 1 and 2, **characterized in that** the preloading member (32) is a wave washer or a tapered washer.

4. Assembly according to any one of Claims 1 to 3, **characterized in that** the holding member (33) is made of a material having a thermal expansion capacity greater than that of the rolling bearing (24), so as to compensate for clearances between the rolling bearing (24) and the bearing (22) that are likely to arise during expansion of the bearing (22) at high temperature.

5. Assembly according to Claim 4, **characterized in that** the holding member (33) is made of a plastic material.

6. Assembly according to any one of Claims 1 to 5, **characterized in that** the holding member (33) has a body (33.1) of annular shape, provided with an axial holding means (33.2) for axially holding said holding member (33) relative to the recess (23).

7. Assembly according to any one of Claims 1 to 5, **characterized in that** the holding member (33) consists of a tolerance ring.

8. Assembly according to any one of Claims 1 to 7, **characterized in that** the holding member (33) is circumscribed entirely inside the recess (23) without extending axially or radially beyond the side of an end wall of said recess (23).

9. Rotary electric machine (10) having an assembly as defined in any one of the preceding claims.
